# EUROPEAN PATENT APPLICATION

(11) **EP 4 611 197 A1**
(43) Date of publication of application: **03.09.2025**
(21) Application number: 25159104.6
(22) Date of filing: 20.02.2025
(51) Int. Cl.: H02J 1/00, B60L 15/00, B60L 50/51, B60L 53/24, H02J 7/00, B60L 53/10, B60L 53/14, B60L 58/21, H02M 1/42

(54) **MULTIFUNCTIONAL OPEN-WINDING DRIVE SYSTEM FOR AN ELECTRIC VEHICLE**

(30) Priority: 26.02.2024 US 202418586870
(71) Applicant: Volvo Car Corporation, 405 31 Göteborg (SE)
(72) Inventor: Mademlis, Georgios, SE-405 31 Göteborg (SE); Norouzzadeh, Alireza, SE-405 31 Göteborg (SE); Torstensson, Per, SE-405 31 Göteborg (SE)
(74) Representative: Nederlandsch Octrooibureau

(57) **Abstract**

An integrated power conversion system for an electric vehicle including: an electric motor utilizing open stator windings; a direct-current-to-alternating-current (DCAC) inverter/power converter electrically coupled to an end of the open stator windings; and a battery group electrically coupled to the inverter/power converter; where the integrated power conversion system is adapted to be selectively operated in all of a traction mode, a lower voltage direct-current (DC) charging mode, a higher voltage DC charging mode, and an alternating current (AC) charging mode. The integrated power conversion system may also include: another DCAC inverter/power converter electrically coupled to another end of the open stator windings opposite the inverter/power converter; and another battery group electrically coupled to the other inverter/power converter, where the other battery group is isolated from the battery group. The DCAC inverters/power converters may be 2-level or multilevel.

## Description

### TECHNICAL FIELD

The present disclosure relates generally to the electric vehicle (EV) field. More particularly, the present disclosure relates to a multifunctional open-winding drive system for an EV

### BACKGROUND

Conventionally, there are no integrated power conversion systems for EVs that efficiently enable all of traction, direct-current (DC) charging, and alternating-current (AC) charging with an open-winding drive system. Some systems integrate traction and charging (either DC charging or AC charging), but do not use an open-winding drive system. Current implementations typically utilize separate traction inverters for an electric motor (EM), a separate on-board charger, and direct-current-to-direct-current (DCDC) converters for DC charging in a boost mode (e.g., for charging an 800V EV at a 400VDC charging station). An integrated power conversion system would be advantageous as it would represent a more compact solution - reducing complexity, weight, and cost.

Specifically, for open-winding motors (and split-phase motors), existing systems utilize a single battery group. An integrated power conversion system utilizing multiple battery groups would be advantageous as it would enable all of traction, DC charging, and AC charging with an open-winding drive system, as well as the balancing of battery groups, etc.

The present background is provided as environmental context only and should not be construed to be limiting in any manner. It will be readily apparent to those of ordinary skill in the art that the principles and concepts of the present disclosure may be implemented in other, non-EV, contexts and applications, without limitation.

### BRIEF SUMMARY

The present disclosure provides an integrated power conversion system for an EV that efficiently enables all of traction, DC charging, and AC charging in a compact package - reducing complexity, weight, and cost. This traction inverter-charging converter system is enabled by the use of an EM with open windings. An inverter/power converter is connected at each end of the stator windings of the EM. The number of phases of each inverter depends on how many phases the EM has. For example, a 3-phase system is illustrated and described, but other configurations may be utilized. Each power converter can have any topology that enables conversion from DC voltage on the battery side to AC voltage on the EM side. A battery group is connected to the DC side of each power converter. In the case that a multilevel power converter is used, each battery group may include multiple battery banks. The stator windings are accessible on both ends of the EM and centrally, and the EM has terminals equal to 2-times the number of phases (e.g., 6 terminals for a 3-phase system).

The drive system of the present disclosure provides multiple advantageous functionalities when utilized in an EV. Related to traction, the EM may be utilized to propel the EV. Related to DC charging with lower DC voltage, the drive system enables the charging of the two battery groups with a DC charging station that has a voltage equal to the individual voltage of each battery group. Related to DC charging with higher DC voltage, the drive system enables the charging of the two battery groups with a DC charging station that has a voltage equal to the summation of the voltage of both battery groups. Related to AC charging, the drive system may act as an on-board charger, converting the AC voltage of the grid into the required DC voltage of each battery group.

Advantageously, a multilevel shape of the differential stator voltage is provided if both power converters are 2-level power converters. It is possible to run in a 2-level mode by not using one of the inverters. It is possible to run in a 3-level mode when supplying - Vb1 and +Vb2. It is possible to run in a 4-level mode when using asymmetric battery groups - the 4^{th} level being the difference between the battery group voltages.

If both power converters are multilevel power converters, the available levels of the differential voltage across the motor windings are different, as follows. Considering converter-1 with x_1 levels and converter-2 with x_2 levels, if the battery voltages of both converters are the same (both the total voltage and the individual voltages), the possible combinations are x_1+x_2-1. If the battery voltages of both converters are different (both the total voltage and the individual voltages), the possible combinations are x_1*x_2. So, for example, for a system with two 2-level converters, 3-level voltage is possible (when the same battery voltages) or 4-level voltage (when different battery voltages). For example, for two 5-level converters, 5+5-1=9 levels are possible (when the same battery voltages), or 25 levels (when different battery voltages).

The integrated power conversion system of the present disclosure is fault tolerant, as the traction mode can function with one of the two inverters under fault.

For a 2-level case, for example, the integrated power conversion system of the present disclosure has a lower component count than a conventional 3-level neutral-point-clamped (NPC) system, utilizing no clamping diodes.

For example, if converter-1 is 3-level and converter-2 is 3-level, the stator winding voltage can be boosted up to 5 levels (if both battery groups have the same voltage) or up to 6 levels (if each battery group has unequal voltage). Having two 3-level NPC inverters for an open-winding system means having 8 switches and 4 diodes per phase, while having a regular motor with a 5-level NPC inverter means having 8 switches and 6 diodes per phase. So, the open winding system saves 2 diodes per phase. A similar comparison exists for other combinations of converters.

Further, for example, better electromagnetic interference (EMI) performance is provided than conventional 2-level systems, similar to a 3-level NPC system. The tradeoff is the need for two isolated high-voltage battery groups. More generally, better EMI performance is provided for multilevel inverters on both ends (converter-1 with x_1 levels and converter-2 with x_2 levels) due to the increase of voltage levels, which leads to lower dV/dt, which leads to lower EMI.

Thus, utilizing an open-winding EM, two inverters/power converters, and two battery groups, the functionalities of traction, DC charging (lower voltage), DC charging (higher voltage), and AC charging may be combined into a single module having a smaller form factor. DC charging can be performed with the charging station connected to only one end of the topology or in parallel to both series-connected ends or in parallel to the stator windings. AC charging can happen with an additional power factor correction (PFC) stage, if necessary. During the AC charging mode, electrical energy is sent to both battery groups sequentially, balancing the voltage and state-of-charge (SOC) of both battery groups. The power conversion system of the present disclosure enables the active balancing of the voltage and SOC of the two battery groups, and enables having multi-level voltage applied at the windings of the EM. The single module has a smaller form factor that integrates multiple components and functionalities, increasing EV range due to weight reduction.

During charging, power flow can be either from the charging station to the vehicle batteries or from the vehicle batteries to the charging station (e.g., vehicle-to-load (V2L) or vehicle-to-grid (V2G)). Thus, all configurations allow bidirectional power flow.

For configurations utilizing two battery groups, voltage and energy balancing between the two battery groups can take place. The two power converters and the EM provide a buck/boost DCDC converter. This may occur during all functions - traction, DC charging, and AC charging.

In some aspects, an integrated power conversion system includes: an electric motor utilizing open stator windings; a direct-current-to-alternating-current (DCAC) inverter/power converter electrically coupled to an end of the open stator windings; and a battery group electrically coupled to the inverter/power converter; where the integrated power conversion system is adapted to be selectively operated in all of a traction mode, a lower voltage direct-current (DC) charging mode, a higher voltage DC charging mode, and an alternating current (AC) charging mode. The integrated power conversion system is adapted to be coupled to a charger at another end of the open stator windings opposite the inverter/power converter. In the traction mode, the battery group and the inverter/power converter provide current to the end of the open stator windings to cause a rotor of the electric motor to rotate and another end of the open stator windings is connected to a Y-connection. In the lower voltage DC charging mode, a voltage of the DC charger is lower than a voltage of the battery group, the open stator windings and the inverter/power converter forming a boost direct-current-to-direct-current (DCDC) converter between the DC charger and the battery group. In the higher voltage DC charging mode, the voltage of the DC charger is equal to or higher than the voltage of the battery group, the inverter/power converter letting current pass through from the DC charger to the battery group. In the AC charging mode, the charger is an AC grid coupled to the other end of the open stator windings one of directly and through an intervening power factor correction (PFC) stage.

In some aspects, the integrated power conversion system may also include: another DCAC inverter/power converter electrically coupled to another end of the open stator windings opposite the inverter/power converter; and another battery group electrically coupled to the other inverter/power converter, where the other battery group is isolated from the battery group. Each of the inverter/power converter and the other inverter/power converter is one of a 2-level inverter/power converter and a multilevel inverter/power converter, where the multilevel inverter/power converter is electrically coupled to a plurality of battery groups.

As used herein, "battery group" refers to all the battery modules that are connected at the power converter at one side of the motor. Given a 2-level inverter, for example, the battery group is equivalent to the battery module. Given a 3-level NPC inverter, for example, the battery group is equivalent to two battery modules connected in serries. The exact number and structure of battery modules depends on the configuration of the converter topology.

In some aspects, the integrated power conversion system is adapted to be coupled to a charger at the end of the open stator windings adjacent to the inverter/power converter and at a pole of one or more of the battery group and the other battery group. In some other aspects, the integrated power conversion system is adapted to be coupled to a charger at a DC side of the inverter/power converter. In some further aspects, the electric motor is a split-phase electric motor and the integrated power conversion system is adapted to be coupled to a charger at a middle point of each of the open stator windings.

In some aspects, in the traction mode, the battery group and the inverter/power converter provide current to the end of the open stator windings and the other battery group and the other inverter/power converter provide current to the other end of the open stator windings to cause a rotor of the electric motor to rotate, and where a voltage difference between the inverter/power converter and the other inverter/power converter determines the differential voltage of each of the open stator windings. In some other aspects, in the traction mode, the battery group and the inverter/power converter provide current to the end of the open stator windings and the other battery group and the other inverter/power converter provide current to the other end of the open stator windings to cause a rotor of the electric motor to rotate, where a voltage difference between the inverter/power converter and the other inverter/power converter determines the differential voltage of each of the open stator windings, and where a charging contactor at a middle point of each of the open stator windings is opened.

In some aspects, the charger is a DC charger and in the lower voltage DC charging mode: when a voltage of the DC charger is equal to a voltage of the battery group, if a voltage of the other battery group is less than the voltage of the battery group, then energy from the battery group flows to the other battery group, and if the voltage of the other battery group is greater than the voltage of the battery group, then the other inverter/power converter, the open stator windings, and a DC capacitor form a boost DCDC converter; and when the voltage of the DC charger is lower than the voltage of the battery group, the other battery group is charged first and subsequently transfers energy to the battery group. In some other aspects, the charger is a DC charger and in the lower voltage DC charging mode: when a voltage of the DC charger is equal to a voltage of the battery group, if the voltage of the battery group is less than a voltage of the other battery group, then the inverter/power converter lets current pass through and the other inverter/power converter, the open stator windings, and a DC capacitor form a boost DCDC converter, and if the voltage of the battery group is greater than the voltage of the other battery group, then the inverter/power converter lets current pass through, the inverter/power converter, the open stator windings, and another DC capacitor form a buck DCDC converter, and the other inverter/power converter lets current pass through; and when a voltage of the DC charger is lower than the voltage of the battery group, then the other battery group is charged first with a contactor open and subsequently sends energy to the battery group with the contactor closed and other contactors open to disconnect the DC charger. In some further aspects, the charger is a DC charger and in the lower voltage DC charging mode: when a voltage of the DC charger is equal to a voltage of the battery group, if a voltage of the other battery group is less than the voltage of the battery group, then energy from the battery group flows to the other battery group, and if the voltage of the other battery group is greater than the voltage of the battery group, then the other inverter/power converter, the open stator windings, and a DC capacitor form a boost DCDC converter; and when the voltage of the DC charger is lower than the voltage of the battery group, the other battery group is charged first and subsequently transfers energy to the battery group.

In some aspects, the charger is a DC charger, in the higher voltage DC charging mode, the DC charger is connected in parallel to a series-chain of the battery group and the other battery group, a voltage of the DC charger is equal to the summation of voltages of the battery group and the other battery group, and the inverter/power converter and the other inverter/power converter divide the voltage of the DC charger into the voltages of the battery group and the other battery group.

In some aspects, in the AC charging mode, the charger is an AC grid coupled to the end of the open stator windings adjacent to the inverter/power converter and at the pole of one or more of the battery group and the other battery group one of directly and through an intervening power factor correction (PFC) stage.

In some aspects, the charger is an AC grid coupled to an intervening power factor correction (PFC) stage and in the AC charging mode: the PFC stage rectifies AC voltage of the AC grid to a DC voltage, where the PFC stage has a same number of phases as the AC grid, and where the DC voltage is unequal to voltages of the battery group and the other battery group; where the other battery group is charged using the PFC through the electric motor; and where the battery group is charged using the other battery group through the electric motor.

In some aspects, in the AC charging mode, the charger is an AC grid coupled to the middle point of the open stator windings one of directly and through an intervening power factor correction (PFC) stage.

In some aspects, the integrated power conversion system is bidirectionally electrically coupled to one of a DC charging infrastructure and an AC charging infrastructure.

In some aspects, the integrated power conversion system is electrically coupled to a 1-phase AC charging infrastructure.

In some aspects, voltage is balanced between the battery group and the other battery group using the electric motor, the inverter/power converter, and the other inverter/power converter as one of a buck direct-current-to-direct-current (DCDC) buck converter and a DCDC boost converter in any of the traction mode, the lower voltage DC charging mode, the higher voltage DC charging mode, and the AC charging mode.

In some aspects, an electric vehicle includes an integrated power conversion system including: an electric motor utilizing open stator windings; a direct-current-to-alternating-current (DCAC) inverter/power converter electrically coupled to an end of the open stator windings; and a battery group electrically coupled to the inverter/power converter; where the integrated power conversion system is adapted to be selectively operated in all of a traction mode, a lower voltage direct-current (DC) charging mode, a higher voltage DC charging mode, and an alternating current (AC) charging mode. The integrated power conversion system may also include: another DCAC inverter/power converter electrically coupled to another end of the open stator windings opposite the inverter/power converter; and another battery group electrically coupled to the other inverter/power converter, where the other battery group is isolated from the battery group.

**In** some aspects, an integrated power conversion method includes providing an integrated power conversion system including: an electric motor utilizing open stator windings; a direct-current-to-alternating-current (DCAC) inverter/power converter electrically coupled to an end of the open stator windings; and a battery group electrically coupled to the inverter/power converter; where the integrated power conversion system is adapted to be selectively operated in all of a traction mode, a lower voltage direct-current (DC) charging mode, a higher voltage DC charging mode, and an alternating current (AC) charging mode; and selectively operating the integrated power conversion system in any of the traction mode, the lower voltage DC charging mode, the higher voltage DC charging mode, and the AC charging mode. The integrated power conversion system may also include: another DCAC inverter/power converter electrically coupled to another end of the open stator windings opposite the inverter/power converter; and another battery group electrically coupled to the other inverter/power converter, where the other battery group is isolated from the battery group.

Special measures are taken to ensure that the electrical machine does not rotate when the system does not operate in a traction mode. This is done with mechanical brakes, or by converter control, or by special design of the motor windings, or by any other possible means.

Control of the power converters is carried out with individual electronic control units (ECUs) that control either separately each converter or both converters together. The control is implemented with any type of CPU-based, or FPGA-based, or any circuit-based means that can control semiconductor devices.

It will be readily apparent to those of ordinary skill in the art that aspects of the present disclosure may be utilized or not utilized in any combination, without limitation, in a given configuration or application.

### BRIEF DESCRIPTION OF THE DRAWINGS

The present disclosure is illustrated and described with reference to the following drawings, in which like reference numbers are used to denote like system component/method steps, as appropriate, and in which:
FIG. 1 is a schematic diagram of one illustrative embodiment of the (2-level) integrated power conversion system of the present disclosure;
FIG. 2 is a schematic diagram illustrating one possible connection point of a charger to the integrated power conversion system;
FIG. 3 is a schematic diagram illustrating another possible connection point of a charger to the integrated power conversion system;
FIG. 4 is a schematic diagram illustrating a further possible connection point of a charger to the integrated power conversion system;
FIG. 5 is a schematic diagram illustrating a still further possible connection point of a charger to the integrated power conversion system;
FIG. 6 is a schematic diagram illustrating different types of power converters that may be used in conjunction with the integrated power conversion system - the converter on the left being a 2-level three phase converter and on the converter on the right being a cascaded H-bridge three phase converter in a Y-connection, by way of example only;
FIG. 7 is a schematic diagram illustrating the drive system of FIG. 1 operated in a traction mode in the charger point connection configuration of FIG. 2 - although a Y-connection is illustrated, a Delta connection or the like would also work, for example;
FIG. 8 is a schematic diagram illustrating the drive system of FIG. 1 having 2-level converters and operated in a traction mode in the charger point connection configuration of FIGS. 3 and 4;
FIG. 9 is a schematic diagram illustrating the drive system of FIG. 1 operated in a traction mode in the charger point connection configuration of FIG. 5;
FIG. 10 is a schematic diagram illustrating the integrated power conversion system of FIG. 1 operated in a DC charging mode in the charger point connection configuration of FIG. 2;
FIG. 11 is a schematic diagram illustrating the integrated power conversion system of FIG. 1 having 2-level converters and operated in a lower voltage DC charging mode in the charger point connection configuration of FIG. 3;
FIG. 12 is a schematic diagram illustrating the integrated power conversion system of FIG. 1 operated in a lower voltage DC charging mode in the charger point connection configuration of FIG. 4;
FIG. 13 is a schematic diagram illustrating the integrated power conversion system of FIG. 1 operated in a lower voltage DC charging mode in the charger point connection configuration of FIG. 5;
FIG. 14 is a schematic diagram illustrating the integrated power conversion system of FIG. 1 operated in a higher voltage DC charging mode in the charger point connection configuration of FIGS. 3, 4, or 5;
FIG. 15 is a schematic diagram illustrating the integrated power conversion system of FIG. 1 operated in an AC charging mode in the charger point connection configuration of FIG. 2;
FIG. 16 is a schematic diagram illustrating the integrated power conversion system of FIG. 1 operated in the AC charging mode in the charger point connection configuration of FIG. 2, also utilizing a PFC stage;
FIG. 17 is a schematic diagram illustrating the integrated power conversion system of FIG. 1 operated in the AC charging mode in the charger point connection configuration of FIG. 2, also utilizing the PFC stage and a 2-level inverter;
FIG. 18 is a schematic diagram illustrating the integrated power conversion system of FIG. 1 operated in the AC charging mode in the charger point connection configuration of FIG. 2, also utilizing a multilevel inverter;
FIG. 19 is a schematic diagram illustrating the integrated power conversion system of FIG. 1 operated in the AC charging mode in the charger point connection configuration of FIG. 2, also utilizing the PFC stage and the multilevel inverter;
FIG. 20 is a schematic diagram illustrating the integrated power conversion system of FIG. 1 operated in an AC charging mode in the charger point connection configuration of FIG. 3;
FIG. 21 is a schematic diagram illustrating the integrated power conversion system of FIG. 1 operated in the AC charging mode in the charger point connection configuration of FIG. 3, also utilizing a PFC stage;
FIG. 22 is a schematic diagram illustrating the integrated power conversion system of FIG. 1 operated in an AC charging mode in the charger point connection configuration of FIG. 4, also utilizing a PFC stage;
FIG. 23 is a flowchart illustrating the use of the integrated power conversion system of FIG. 22 operated in the AC charging mode in the charger point connection configuration of FIG. 4, utilizing the PFC stage for the sequential charging of two battery groups;
FIG. 24 is a schematic diagram illustrating the integrated power conversion system of FIG. 1 operated in an AC charging mode in the charger point connection configuration of FIG. 5.
FIG. 25 is a schematic diagram illustrating the integrated power conversion system of FIG. 1 operated in an AC charging mode in the charger point connection configuration of FIG. 2, utilizing a 1-phase AC grid;
FIG. 26 is a schematic diagram illustrating the integrated power conversion system of FIG. 1 operated in the AC charging mode in the charger point connection configuration of FIG. 3, utilizing the 1-phase AC grid;
FIG. 27 is a schematic diagram illustrating the integrated power conversion system of FIG. 1 operated in the AC charging mode in the charger point connection configuration of FIG. 4, utilizing the 1-phase AC grid;
FIG. 28 is a schematic diagram illustrating the integrated power conversion system of FIG. 1 operated in the AC charging mode in the charger point connection configuration of FIG. 5, utilizing the 1-phase AC grid; and
FIG. 29 is a schematic diagram illustrating the integrated power conversion system of FIG. 1 operated in an AC charging mode in the charger point connection configuration of FIG. 5, utilizing a 1-phase AC grid and multilevel inverters.

It will be readily apparent to those of ordinary skill in the art that aspects illustrated and described in connection with the various drawings may be utilized or not utilized in any combination, without limitation, in a given configuration or application.

### DETAILED DESCRIPTION

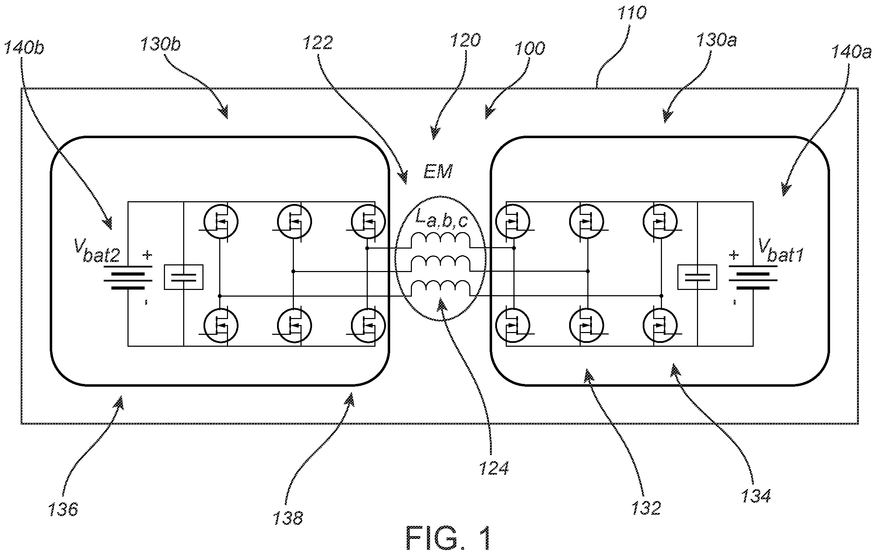

Referring to FIG. 1, again, the present disclosure provides an integrated power conversion system 100 (or drive system 100) for an EV 110 that enables traction, DC charging, and AC charging in a compact package - reducing complexity, weight, and cost. The integrated power conversion system 100 includes an EM 120 with a stator 122 utilizing open windings 124. The EM 120 may be any type of motor that requires it to be power converter-driven, such as, but not limited to, an induction machine or a permanent magnet synchronous machine, well known to those of ordinary skill in the art and not described in further detail. Other comparable types of motors may be used equally. Special attention is given to the EM not rotating when it is operated in a charging mode (AC or DC). This may be accomplished by a mechanical method (e.g., a brake), special control of the power converters, and/or special design of the EM stator windings. The open windings 124 of the stator 122 provide breaks or connection points for the connection of a direct-current-to-alternating-current (DCAC) inverter/power converter 130a, 130b at each end of the stator windings 124. Each inverter 130a, 130b (and/or power converter 130a, 130b) includes a power stage 132 including gate drivers 134 associated with the various phases of the EM 120. Each inverter 130a, 130b may be a pulse-width modulation (PWM) inverter, a direct torque control (DTC) inverter, or the like, well known to those of ordinary skill in the art and not described in further detail. Other comparable types of inverters/power converters may be used equally. The number of phases of each inverter 130a, 130b depends on how many phases the EM 120 has. For example, a 3-phase system is illustrated and described, but other configurations may be utilized (e.g., 2-level, 4-level). Each inverter/power converter 130a, 130b can have any topology that enables conversion from a DC voltage on the battery side 136 to an AC voltage on the EM side 138. An isolated battery group 140a, 140b is connected to the DC side 136 of each inverter/power converter 130a, 130b. In some illustrations, each battery group 140a, 140b is shown combined into the associated inverter 130a, 130b, and is not shown as a separate component, The stator windings 124 are accessible on both ends of the EM 120 and centrally, and the EM 120 has terminals equal to 2-times the number of phases (e.g., 6 terminals for a 3-phase system). It should be noted that any type of battery typically utilized in EVs may be utilized in the present application.

The drive system 100 of the present disclosure provides multiple advantageous functionalities when utilized in an EV 110. Related to traction, the EM 120 may be utilized to propel the EV 110. Related to DC charging with lower DC voltage, the drive system 100 enables the charging of the two battery groups 140a, 140b with a DC charging station that has a voltage equal to the individual voltage of each battery group 140a, 140b. Related to DC charging with higher DC voltage, the drive system 100 enables the charging of the two battery groups 140a, 140b with a DC charging station that has a voltage equal to the summation of the voltage of both battery groups 140a, 140b. Related to AC charging, the drive system 100 may act as an on-board charger, converting the AC voltage of the grid into the required DC voltage of each battery group 140a, 140b.

Advantageously, a multilevel shape of the differential stator voltage is provided if both power converters 130a, 130b are 2-level power converters. It is possible to run in a 2-level mode by not using one of the inverters 130a, 130b. It is possible to run in a 3-level mode when supplying -Vb1 and +Vb2. It is possible to run in a 4-level mode when using asymmetric battery groups 140a, 140b - the 4^{th} level being the difference between the battery group voltages.

If both power converters 130a, 130b are multilevel power converters, the available levels of the differential voltage across the motor windings 124 are different, as follows. Considering converter-1 with x_1 levels and converter-2 with x_2 levels, if the battery voltages of both converters 130a, 130b are the same (both the total voltage and the individual voltages), the possible combinations are x_1+x_2-1. If the battery voltages of both converters 130a, 130b are different (both the total voltage and the individual voltages), the possible combinations are x_1*x_2. So, for example, for a system 100 with two 2-level converters, 3-level voltage is possible (when the same battery voltages) or 4-level voltage (when different battery voltages). For example, for two 5-level converters, 5+5-1=9 levels are possible (when the same battery voltages), or 25 levels (when different battery voltages).

The integrated power conversion system 100 is fault tolerant, as the traction mode can function with one of the two inverters 130, 130b under fault.

For a 2-level case, for example, the integrated power conversion system 100 has a lower component count than a conventional 3-level NPC system, utilizing no clamping diodes.

For example, if converter-1 is 3-level and converter-2 is 3-level, the stator winding voltage can be boosted up to 5 levels (if both battery groups 140a, 140b have the same voltage) or up to 6 levels (if each battery group 140a, 140b has unequal voltage). Having two 3-level NPC inverters for an open-winding system means having 8 switches and 4 diodes per phase, while having a regular motor with a 5-level NPC inverter means having 8 switches and 6 diodes per phase. So, the open winding system saves 2 diodes per phase. A similar comparison exists for other combinations of converters.

Further, for example, better EMI performance is provided than conventional 2-level systems, similar to a 3-level NPC system. The tradeoff is the need for two isolated high-voltage battery groups 140a, 140b. More generally, better EMI performance is provided for multilevel inverters 130a, 130b on both ends (converter-1 with x_1 levels and converter-2 with x_2 levels) due to the increase of voltage levels, which leads to lower dV/dt, which leads to lower EMI.

Thus, utilizing the open-winding EM 120, two inverters/power converters 130a, 130b, and two battery groups 140a, 140b, the functionalities of traction, DC charging (lower voltage), DC charging (higher voltage), and AC charging may be combined into a single module having a smaller form factor. DC charging can be performed with the charging station connected to only one end of the topology or in parallel to both series-connected ends or in parallel to the stator windings 124. AC charging can happen with an additional PFC stage, if necessary. During the AC charging mode, electrical energy is sent to both battery groups 140a, 140b sequentially, balancing the voltage and SOC of both battery groups 140a, 140b. The power conversion system 100 of the present disclosure enables the active balancing of the voltage and SOC of the two battery groups 140a, 140b, and enables having multi-level voltage applied at the windings 124 of the EM 120. The single module has a smaller form factor that integrates multiple components and functionalities, increasing EV range due to weight reduction. It should be noted that, as used herein, the terms "coupled," "connected," and "electrically connected" are used interchangeably to refer to an electrical connection through which current can flow.

During charging, power flow can be either from the charging station to the vehicle batteries 140a, 140b or from the vehicle batteries 140a, 140b to the charging station (e.g., V2L or V2G). Thus, all configurations allow bidirectional power flow.

For configurations utilizing two battery groups 140a, 140b, voltage and energy balancing between the two battery groups 140a, 140b can take place. The two power converters 130a, 130b and the EM 120 provide a buck/boost DCDC converter. This may occur during all functions - traction, DC charging, and AC charging.

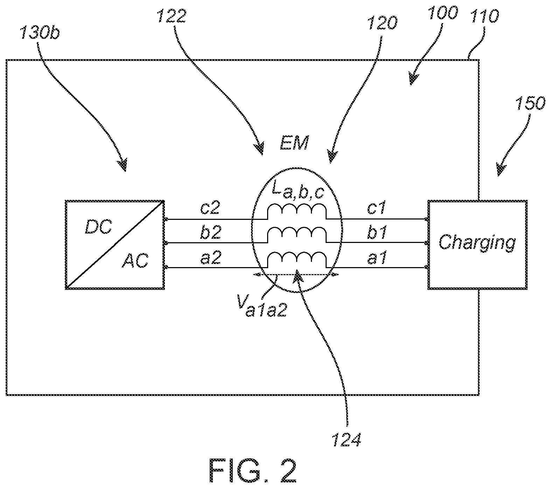

FIG. 2 is a schematic diagram illustrating one possible connection point of a charger 150 to the integrated power conversion system 100. Here, one of the power converters 130b is utilized and coupled to one end of the stator windings 124 of the EM 120, while the other power converter 130a is removed, disconnected, or otherwise not utilized. The charger 150 is coupled to this open end of the stator windings 124 of the EM 120. The charging infrastructure may be either DC or AC. Here, as in some other illustrations, the battery group 140b is not explicitly shown, but is part of the inverter 130b. In this and all configurations, suitable 3-phase contactors can be installed in the 3-phase output of the charging infrastructure.

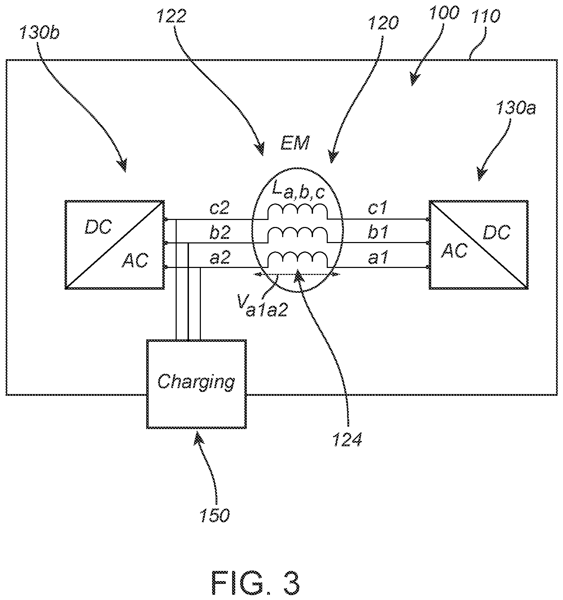

FIG. 3 is a schematic diagram illustrating another possible connection point of the charger 150 to the integrated power conversion system 100. Here, both of the power converters 130a, 130b are utilized and coupled to respective ends of the stator windings 124 of the EM 120. The charger 150 is coupled to one end of the stator windings 124 of the EM 120 adjacent to the associated power converter 130b and to (-) pole of the battery group(s) 140a, 140b. The charging infrastructure again may be either DC or AC. Here, as in some other illustrations, the battery groups 140a, 140b are not explicitly shown, but are parts of the inverters 130a, 130b. In this and all configurations, suitable 3-phase contactors can be installed in the 3-phase output of the charging infrastructure. Further, left and right configurations are interchangeable.

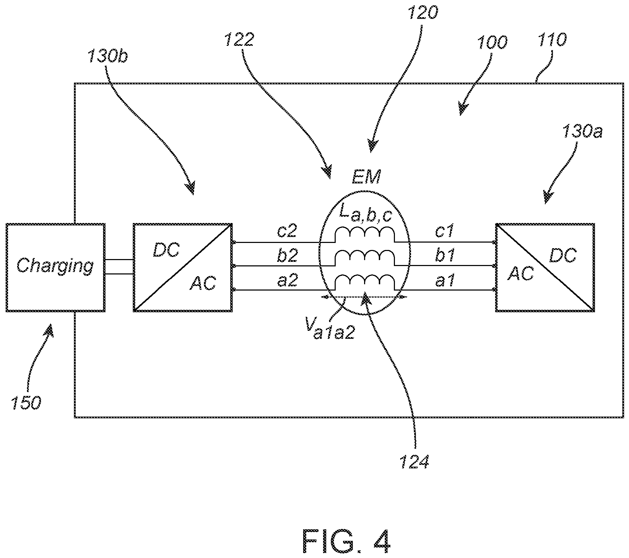

FIG. 4 is a schematic diagram illustrating a further possible connection point of the charger 150 to the integrated power conversion system 100. Here, both of the power converters 130a, 130b are utilized and coupled to respective ends of the stator windings 124 of the EM 120. The charger 150 is coupled to one of the power converters 130b. The charging infrastructure again may be either DC or AC. Here, as in some other illustrations, the battery groups 140a, 140b are not explicitly shown, but are parts of the inverters 130a, 130b. In this and all configurations, suitable 3-phase contactors can be installed in the 3-phase output of the charging infrastructure. Further, left and right configurations are again interchangeable.

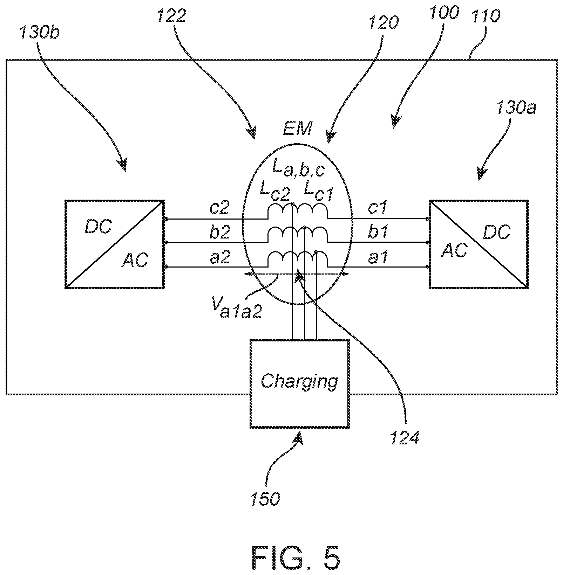

FIG. 5 is a schematic diagram illustrating a still further possible connection point of the charger 150 to the integrated power conversion system 100. Here, both of the power converters 130a, 130b are utilized and coupled to respective ends of the stator windings 124 of the EM 120. The charger 150 is coupled centrally to the windings 124 of the EM 120. A split-phase open-winding EM 120 is used. The charging infrastructure again may be either DC or AC. Here, as in some other illustrations, the battery groups 140a, 140b are not explicitly shown, but are parts of the inverters 130a, 130b. In this and all configurations, suitable 3-phase contactors can be installed in the 3-phase output of the charging infrastructure.

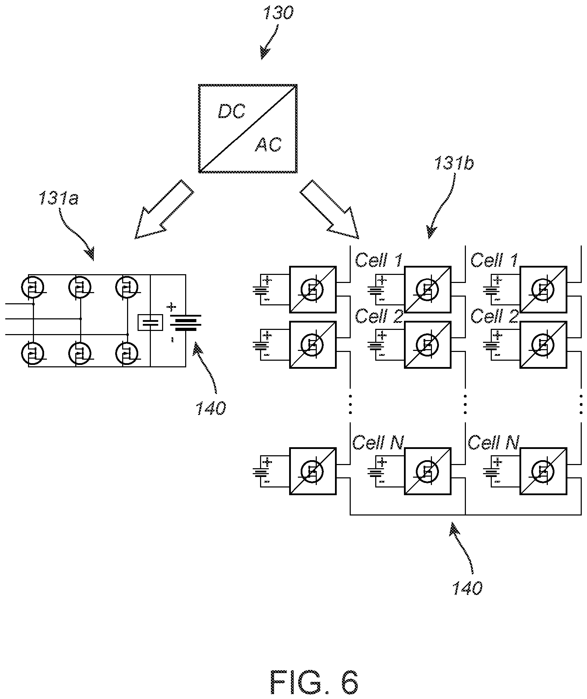

FIG. 6 is a schematic diagram illustrating different types of power converters 130 that may be used in conjunction with the integrated power conversion system 100. The first illustrative type is a 2-level power converter 131a, with an AC side opposite the battery bank 140 that has two levels at the phase voltage. The second illustrative type is a multilevel power converter 131b, with an AC output that has more than two levels at the phase voltage. A cascaded H-bridge converter is shown, but any type of multilevel converter topology could be used. More than one battery bank 140 is used at each power converter 131b. Any type of power switch technology may be used with the integrated power conversion system 100, e.g. MOSFET or IGBT with antiparallel diode, Si, SiC, GaN.

For the configurations utilizing two power converters 130a, 130b, both power converters 130a, 130b can have the same switching frequency for their power switches or different switching frequencies. Both power converters 130a, 130b can also have the same or different control bandwidths. Finally, both power converters 130a, 130b can also have the same or different semiconductor technologies (e.g., Si or SiC).

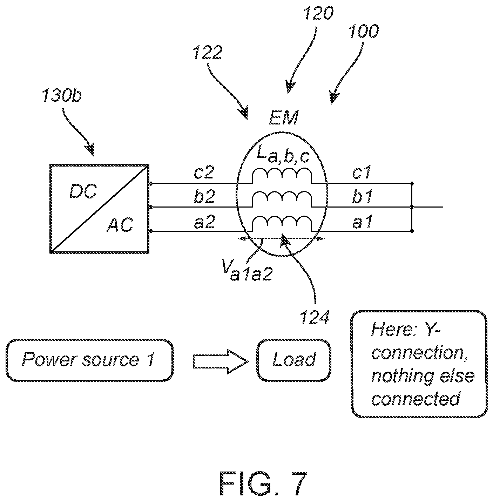

Referring to FIG. 7, when the drive system 100 of the EV 110 is operated in a traction mode in the charger connection point configuration of FIG. 2, with one of the inverters 130a removed, disconnected, or otherwise not utilized, the inverter 130b utilized provides power to the corresponding side of the stator windings 124 of the EM 120 to generate torque. The open side of the stator windings 124 can be connected to a build Y (star)-connection. Thus the charging infrastructure end is left open. Here, the inverter 130b can be either 2-level or multilevel. The Y-connection, although illustrated, is not required here. A Delta connection or the like would also work, for example.

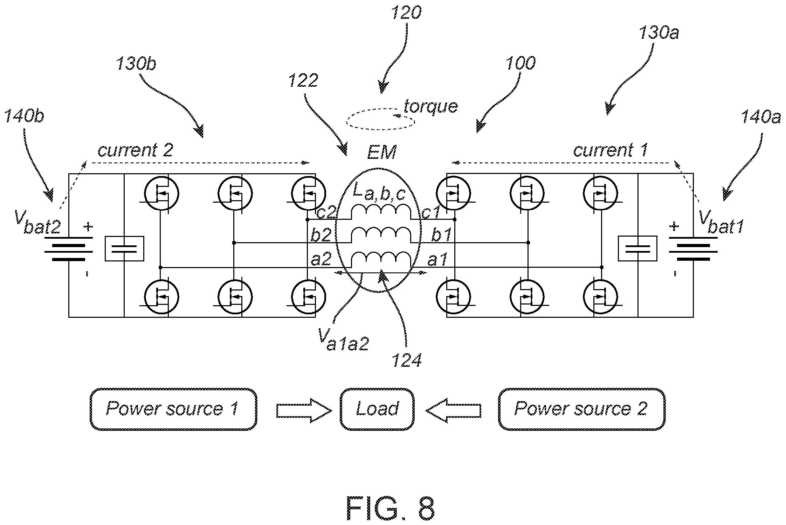

Referring to FIG. 8, when the drive system 100 of the EV 110 is operated in a traction mode in the charger connection point configuration of FIGS. 3 and 4, each inverter 130a, 130b acts as a power source and provides current to the windings 124 of the stator 122 of the EM 120, i.e. the load, such that the EM 120 generates torque to drive the EV 110. The differential voltage of each stator winding 124 is created by the voltage difference between the voltage of the first inverter 130a and the voltage of the second inverter 130b. Further, it is possible to control the share of power consumed from each of the two battery groups 140a, 140b, i.e., power source 1 and power source 2. Here, the inverters 130a, 130b can each be either 2-level or multilevel, the same or in combination.

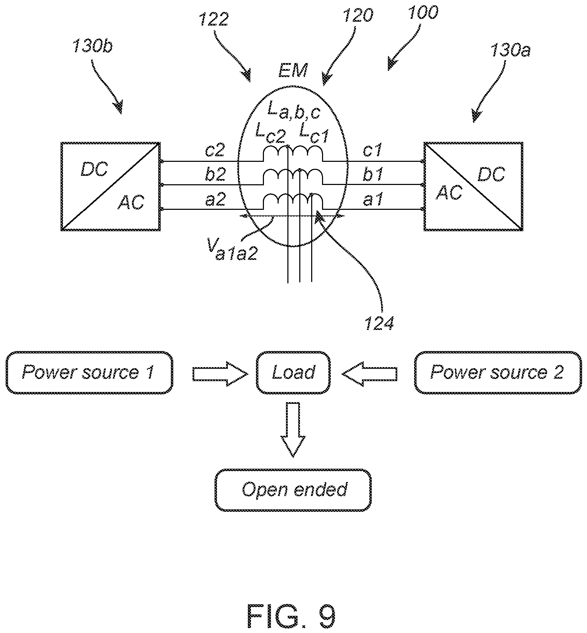

Referring to FIG. 9, when the drive system 100 of the EV 110 is operated in a traction mode in the charger connection point configuration of FIG. 5, each inverter 130a, 130b provides current to the windings 122 of the stator 124. The differential voltage of each stator winding 124 is created by the voltage difference between the first inverter 130a and the second inverter 130b. Both parts of each stator winding 124 are used for traction operation. The middle point is left open-ended by opening the charging 3-phase contactors. Here, again, the inverters 130a, 130b can each be either 2-level or multilevel, the same or in combination.

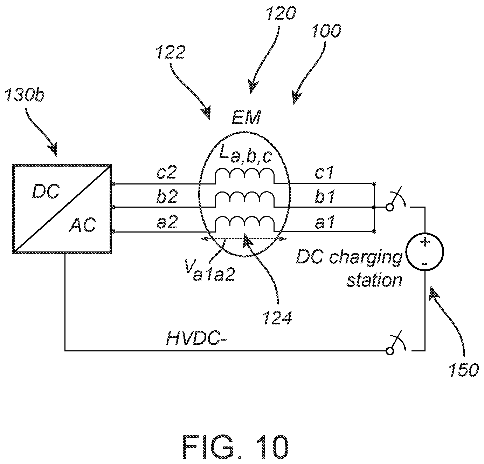

Referring to FIG. 10, when the integrated power conversion system 100 of the EV 110 is operated in a DC charging mode in the charger connection point configuration of FIG. 2, with one of the inverters 130a removed, disconnected, or otherwise not utilized, the DC charger 150 is connected to an end of the open stator windings 124 opposite the inverter 130b utilized. If the voltage of the DC charger 150 is equal to or higher than the voltage of the battery group 140b utilized, then the inverter 130b simply lets the current pass through, providing higher voltage charging (e.g., around 800V or more) of the battery group 140b by the DC charger 150. If the voltage of the DC charger 150 is lower than the voltage of the battery group 140b utilized, then the open stator windings 124 and the inverter 130b form a boost DCDC converter, providing lower voltage charging (e.g., around 400V) of the battery group 140b by the DC charger 150. Here, again, the inverter 130b can each be either 2-level or multilevel.

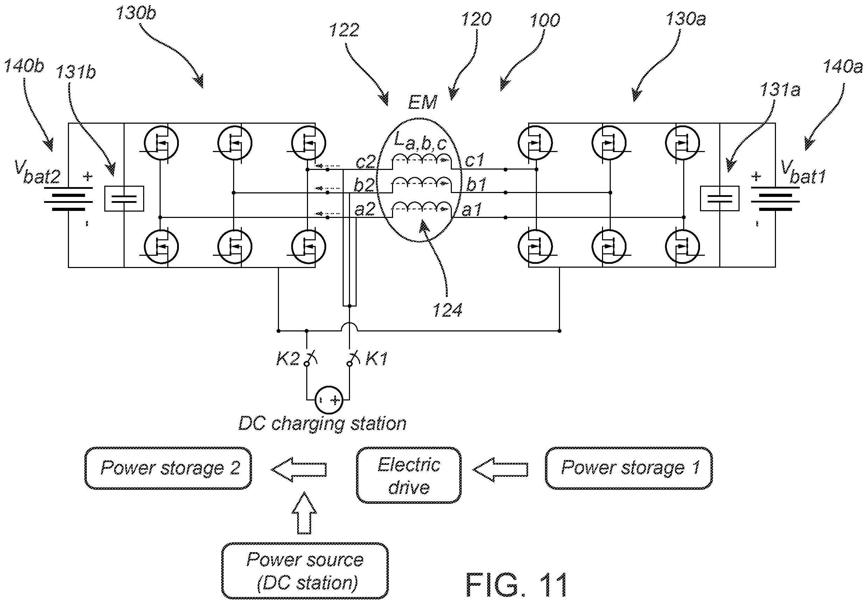

Referring to FIG. 11, when the integrated power conversion system 100 of the EV 110 is operated in a lower voltage DC charging mode (e.g., around 400V) in the charger connection point configuration of FIG. 3, the DC charger 150 is connected to one of the two sides of the EM 120 and to the (-) pole of the battery groups 140a, 140b. During charging, contactors K1 and K2 are closed. Here, the voltage of the DC charger 150 is equal to the voltage of the battery group 140b, V_{bat2}. If V_{bat1}<V_{bat2}, then energy from the battery group 140b flows to the other battery group 140a. If V_{bat1}>V_{bat2}, then the inverter 130a along with the EM windings 122 and the DC capacitor 131a form a boost DCDC converter. If the voltage of the DC charger 150 is lower than the voltage of the battery group 140b, V_{bat2}, the other battery group 140a will be charged first and subsequently transfer energy to the battery group 140b. Here, again, the inverters 130a, 130b can each be either 2-level or multilevel, the same or in combination.

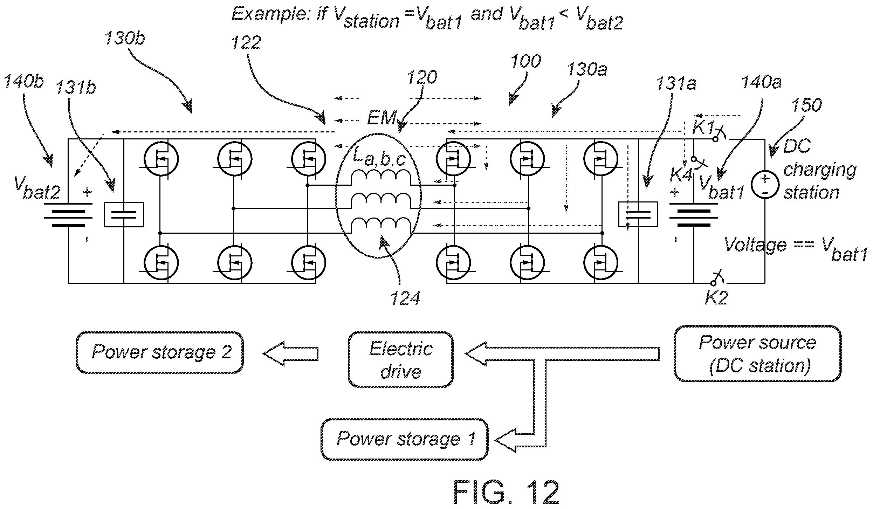

Referring to FIG. 12, when the integrated power conversion system 100 of the EV 110 is operated in a lower voltage DC charging mode (e.g., around 400V) in the charger connection point configuration of FIG. 4, the DC charger 150 is connected to one of the two sides of the drive system 100, in parallel to one of the battery groups 140a. When the voltage of the DC charger 150 is equal to the voltage of the connected battery group 140a, the two battery groups 140a, 140b will have a voltage difference due to different SOC. The EM 120 provides current to charge the other battery group 140b. Contactors K1 an K2 allow connection/disconnection of the DC charger 150 and are closed to enable charging. If V_{bat1}<V_{bat2}, then the right-side inverter 130a lets current pass through. The left-side inverter 130b together with the open stator windings 124 and the left DC capacitor 131b forms a boost DCDC converter. If V_{bat1}>V_{bat2}, then the right-side inverter 130a lets current pass through. The right-side inverter 130a together with the open stator windings 124 and the right DC capacitor 131a forms a buck DCDC converter. The left-side inverter 130b lets current pass through. If the DC charger voltage is lower than V_{bat1}, then V_{bat2} is charged first (contactor K4 is open) and subsequently sends energy to V_{bat1} (contactor K4 is closed and contactors K1 and K2 are open). Here, again, the inverters 130a, 130b can each be either 2-level or multilevel, the same or in combination.

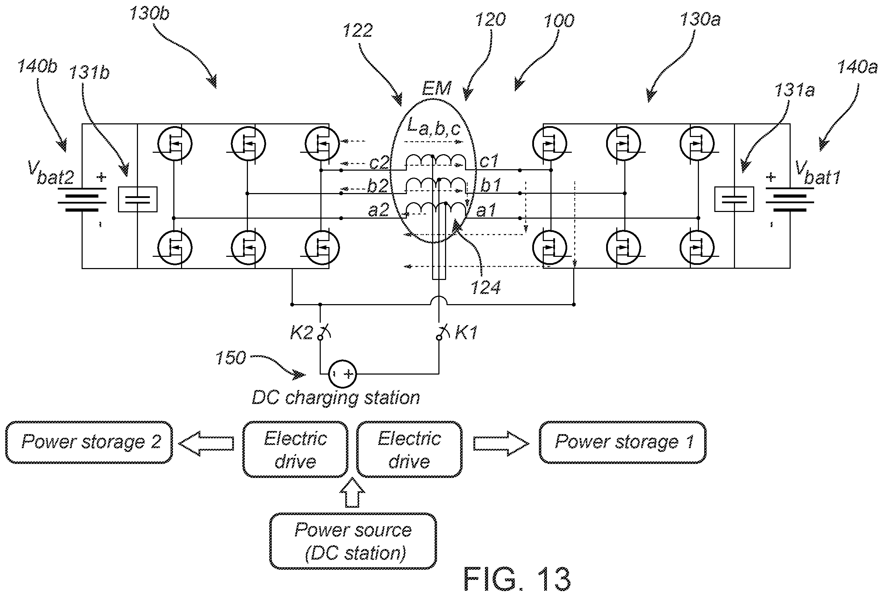

Referring to FIG. 13, when the integrated power conversion system 100 of the EV 110 is operated in a lower voltage DC charging mode (e.g., around 400V) in the charger connection point configuration of FIG. 5, the DC charger 150 is connected to the middle point of the open stator windings 124 and to the (-) pole of the battery groups 140a, 140b. Due to symmetry, the DC charger voltage can be equal to either V_{bat1} or V_{bat2}. The two battery groups 140a, 140b will have a voltage difference due to different SOC. During charging, contactors K1 and K2 are closed. Here, the voltage of the DC charger 150 is equal to the voltage of the battery group 140b, V_{bat2}, for example. If V_{bat1}<V_{bat2}, then energy from the battery group 140b flows to the other battery group 140a. If V_{bat1}>V_{bat2}, then the inverter 130a along with the EM windings 122 and the DC capacitor 131a form a boost DCDC converter. If the voltage of the DC charger 150 is lower than the voltage of the battery group 140b, V_{bat2}, for example, the other battery group 140a will be charged first and subsequently transfer energy to the battery group 140b. Here, again, the inverters 130a, 130b can each be either 2-level or multilevel, the same or in combination.

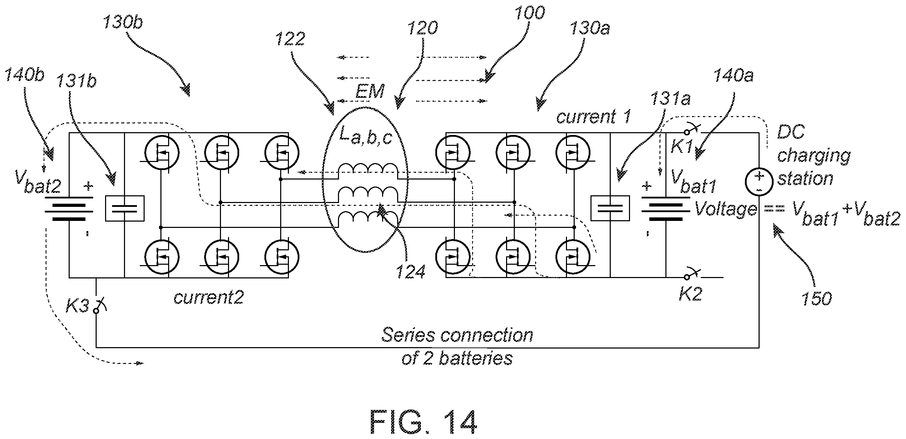

Referring to FIG. 14, when the integrated power conversion system 100 of the EV 110 is operated in a higher voltage DC charging mode (e.g., around 800V or more) in the charger connection point configuration of FIGS. 3, 4, or 5, the DC charger 150 is connected in parallel to the series-chain of both battery groups 140a, 140b. The voltage of the DC charger 150 is equal to the summation of the voltages of the two battery groups 140a, 140b. Each inverter 130a, 130b divides the DC charger voltage into the voltage of each battery group 140a, 140b. The DC charger is connected to the integrated power conversion system 100 via contactors K1 and K3, which are closed during charging. Here, again, the inverters 130a, 130b can each be either 2-level or multilevel, the same or in combination.

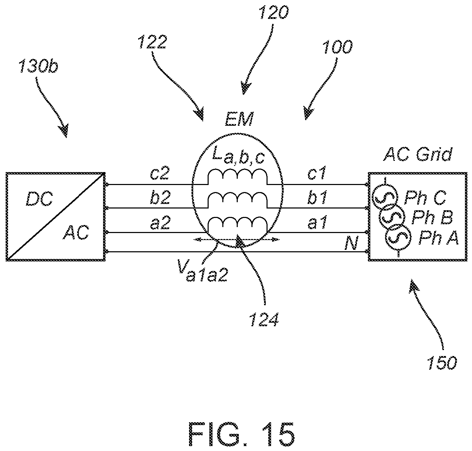

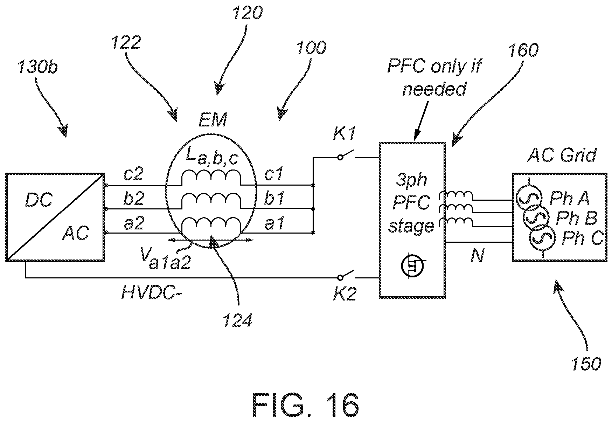

FIGS. 15 and 16 illustrate the integrated power conversion system 100 operated in an AC charging mode in the charger point connection configuration of FIG. 2. Here, an AC charger 150 is connected to the EM 120 opposite the inverter 130b and battery group 140b utilized. If the voltage of the battery group 140b is not high enough to connect directly to the grid 150, then a PFC stage 160 is installed between the EM 120 and the grid 150, with contactors K1 and K2.

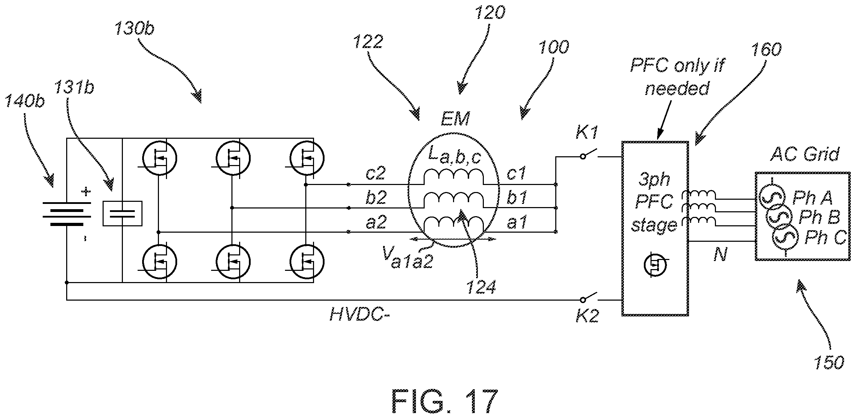

FIG. 17 illustrates the integrated power conversion system 100 operated in the AC charging mode in the charger point connection configuration of FIG. 2, utilizing the PFC stage 160 and a 2-level inverter 130b.

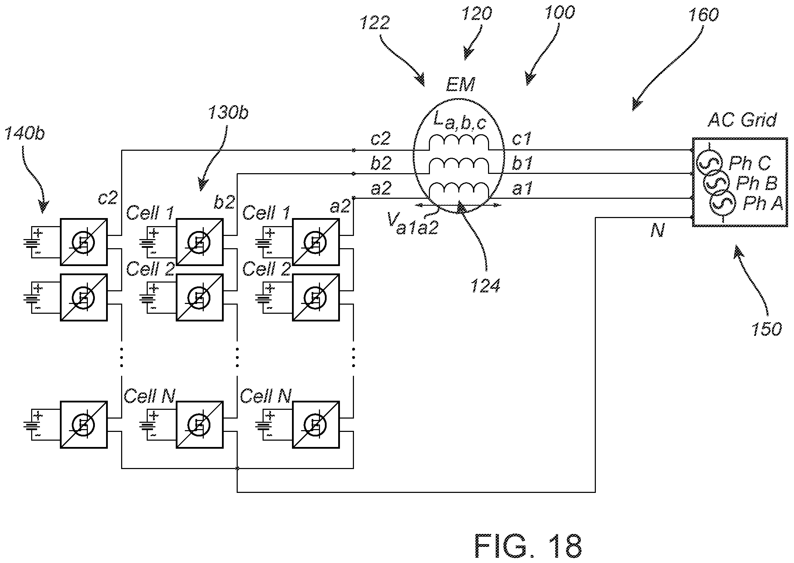

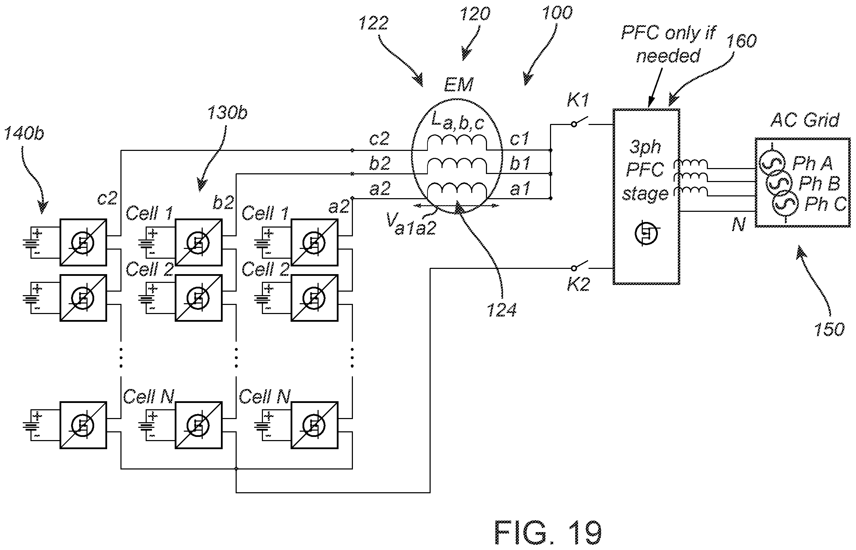

FIGS. 18 and 19 illustrate the integrated power conversion system operated in the AC charging mode in the charger point connection configuration of FIG. 2, utilizing a multilevel inverter 130b, both with an without the PFC stage 160.

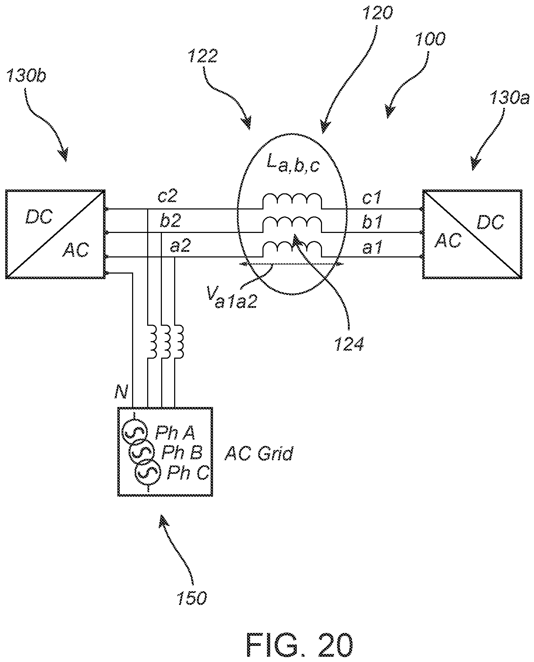

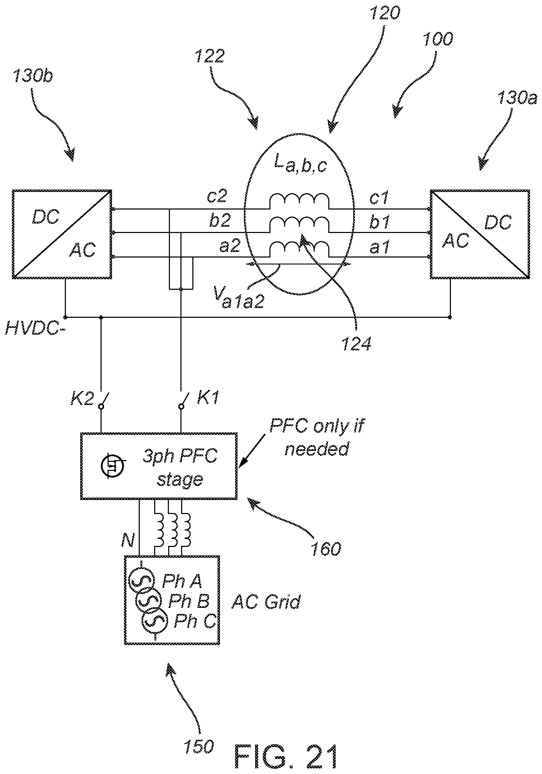

FIGS. 20 and 21 illustrate the integrated power conversion system 100 operated in an AC charging mode in the charger point connection configuration of FIG. 3. Here, an AC charger 150 is connected to an end of the open stator windings 124 of the EM 120 and the (-) pole of the battery group(s) 140a, 140b. If the voltage of the battery group(s) 140a, 140b is not high enough to connect directly to the grid 150, then a PFC stage 160 is installed between the EM 120 and the grid 150, with contactors K1 and K2. Here, again, the inverters 130a, 130b can each be either 2-level or multilevel, the same or in combination.

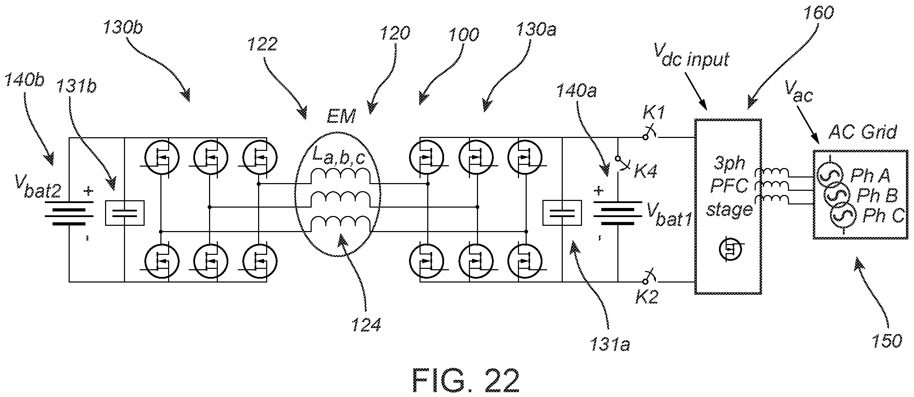

Referring to FIG. 22, when the integrated power conversion system 100 of the EV 110 is operated in an AC charging mode in the charger connection point configuration of FIG. 4, the AC grid 150 is connected to the battery side of one of the two inverters 130a, 130b, in parallel to the associated battery group 140a, 140b, via a PFC stage 160. As illustrated, the AC grid 150 and PFC stage 160 are connected to the battery side of the first inverter 130a, in parallel to the first battery group 140a. The PFC stage 160 is responsible for rectifying the AC voltage of the AC grid 150 to a DC voltage, converting V_{ac} to V_{dc_input}. The PFC stage 160 has the same number of phases as the AC grid 150 (3 phases are illustrated), and the PFC stage 160 is responsible for satisfying AC grid standards, in terms of total harmonic distortion (THD) and power factor. Here, V_{dc_input} is unequal to the voltages of the battery groups 140a, 140b. Using this setup, the batteries or battery banks 140a, 140b are charged in a sequence. Here, again, the inverters 130a, 130b can each be either 2-level or multilevel, the same or in combination.

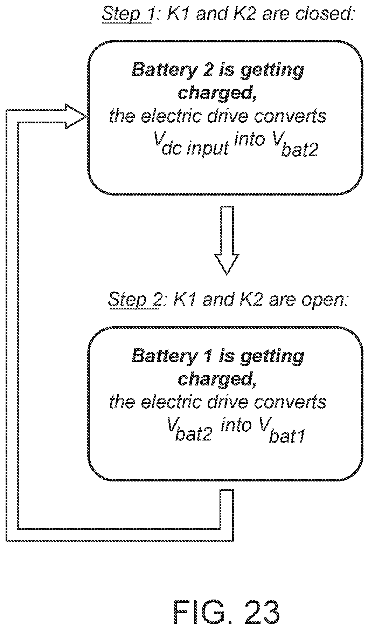

Referring to FIG. 23, the battery groups 140a, 140b are charged in a sequence. First, contactors K1 and K2 are closed, with contactor K4 opened, and the second battery group 140b is charged using the PFC stage 160, with the EM 120 converting V_{dc_input} into V_{bat2}. Second, contactors K1 and K2 are opened, with contactor K4 closed, and the first battery group 140a is charged using the second battery group 140b, with the EM 120 converting V_{bat2} into V_{bat1}. These steps are repeated until both battery groups 140a, 140b are charged.

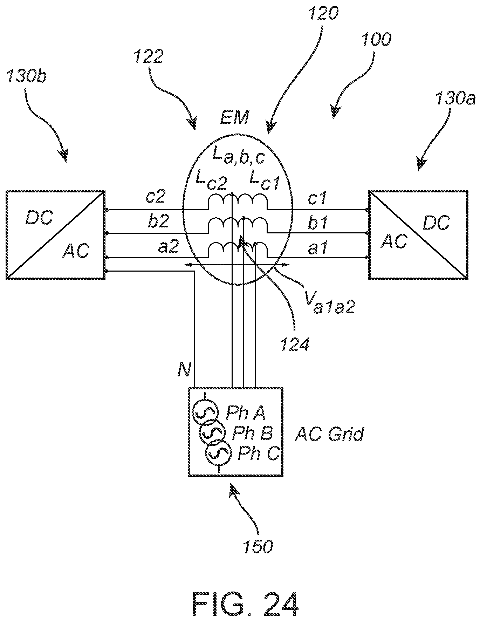

FIG. 24 is a schematic diagram illustrating the integrated power conversion system 100 operated in an AC charging mode in the charger point connection configuration of FIG. 5, with the charger being an AC grid 150. Again, a PFC stage 160 may optionally be disposed between the AC grid 150 and the middle point of the stator windings 124 as needed.

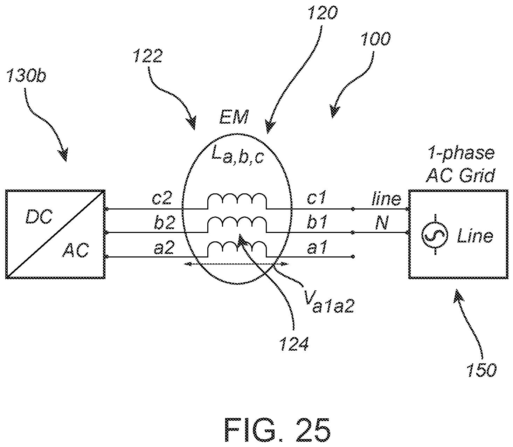

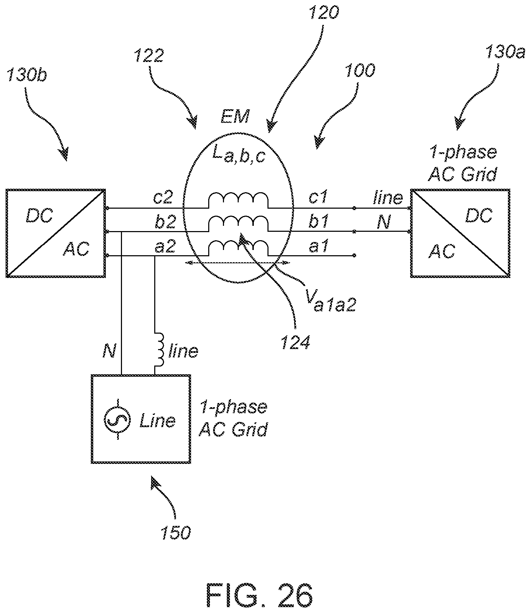

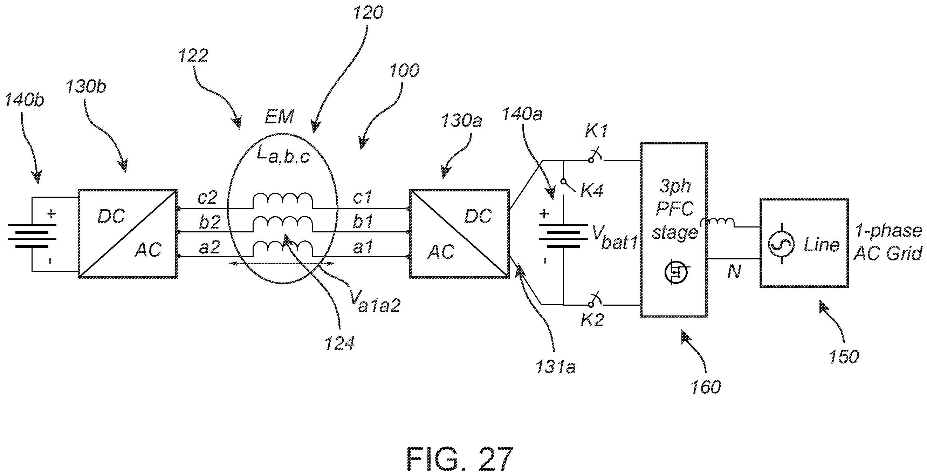

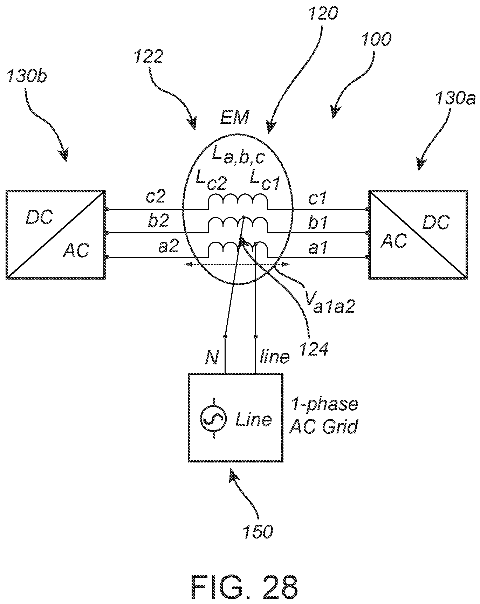

FIGS. 25-28 are schematic diagrams illustrating the integrated power conversion system of FIG. 1 operated in an AC charging mode in the charger point connection configuration of FIGS. 2-5, respectively, utilizing a 1-phase AC grid 150. If necessary, a PFC stage 160 can be connected between the AC grid 150 and the N point. Here, the grid line is connected to one of the EM phases, while the neutral (N) is connected to another phase. The third phase is not utilized. Other combinations are also possible, depending on the power converter topology. For example, two parallel phases can be used for the line, or all three phases can be used for the line, with a separate neutral connection. Here, again, the inverters 130a, 130b can each be either 2-level or multilevel, the same or in combination. The functionality in each case remains the same as the 3-phase AC charging descriptions provided.

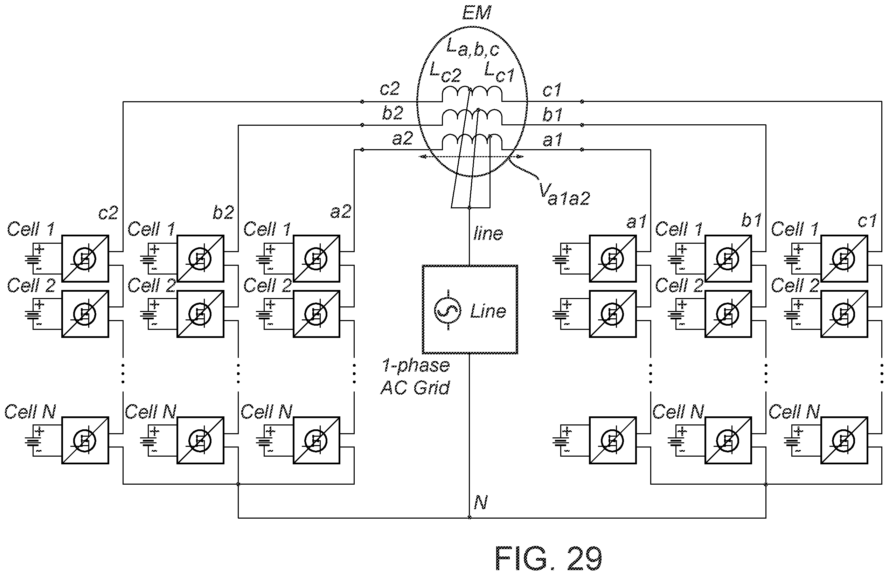

FIG. 29 is a schematic diagram illustrating the integrated power conversion system of FIG. 1 operated in an AC charging mode in the charger point connection configuration of FIG. 5, utilizing a 1-phase AC grid 150 and multilevel inverters 130a, 130b. Here, the grid line is connected to the parallel connection of all three phases of the EM 120. The neutral point of the grid is connected to the middle point of both inverters 130a, 130b.

It should be noted that the mode of the integrated power conversion/drive system 100 may be selected or changed by operator input to a control interface within the EV 110, for example, switching from the traction mode to one of the charging modes (DC or AC), or may be implemented by a control system autonomously based on an operation state of the EV 110 selected by the operator manually or under autonomous operation. The mode may also be selected or changed automatically upon the connection of a given charger (DC or AC) 150, for example, in a given charger connection point configuration. By way of example only, when a lower voltage DC charger, higher voltage DC charger, or AC charger 150 is connected to the integrated power conversion system 100 and the EV 110, in the given charger connection point configuration, the mode may automatically be switched from the traction mode to the lower voltage DC charging mode, the higher voltage DC charging mode, or the AC charging mode, respectively, without further intervention from the operator.

CLAUSES:
1. An integrated power conversion system, comprising:
   an electric motor utilizing open stator windings;
   a direct-current-to-alternating-current (DCAC) inverter/power converter electrically coupled to an end of the open stator windings; and
   a battery group electrically coupled to the inverter/power converter;
   wherein the integrated power conversion system is adapted to be selectively operated in all of a traction mode, a lower voltage direct-current (DC) charging mode, a higher voltage DC charging mode, and an alternating current (AC) charging mode.
2. The integrated power conversion system of clause 1, wherein the integrated power conversion system is adapted to be coupled to a charger at another end of the open stator windings opposite the inverter/power converter.
3. The integrated power conversion system of clause 1, wherein, in the traction mode, the battery group and the inverter/power converter provide current to the end of the open stator windings to cause a rotor of the electric motor to rotate and another end of the open stator windings is connected to one of a Y-connection and a Delta connection.
4. The integrated power conversion system of clause 2, wherein the charger is a DC charger and:
   in the lower voltage DC charging mode, a voltage of the DC charger is lower than a voltage of the battery group, the open stator windings and the inverter/power converter forming a boost direct-current-to-direct-current (DCDC) converter between the DC charger and the battery group; and
   in the higher voltage DC charging mode, the voltage of the DC charger is equal to or higher than the voltage of the battery group, the inverter/power converter letting current pass through from the DC charger to the battery group.
5. The integrated power conversion system of clause 2, wherein, in the AC charging mode, the charger is an AC grid coupled to the other end of the open stator windings one of directly and through an intervening power factor correction (PFC) stage.
6. The integrated power conversion system of clause 1, further comprising:
   another DCAC inverter/power converter electrically coupled to another end of the open stator windings opposite the inverter/power converter; and
   another battery group electrically coupled to the other inverter/power converter, wherein the other battery group is isolated from the battery group.
7. The integrated power conversion system of clause 6, wherein each of the inverter/power converter and the other inverter/power converter is one of a 2-level inverter/power converter and a multilevel inverter/power converter, wherein the multilevel inverter/power converter is electrically coupled to a plurality of battery groups.
8. The integrated power conversion system of clause 6, wherein the integrated power conversion system is adapted to be coupled to a charger at the end of the open stator windings adjacent to the inverter/power converter.
9. The integrated power conversion system of clause 6, wherein the integrated power conversion system is adapted to be coupled to a charger at a DC side of the inverter/power converter.
10. The integrated power conversion system of clause 6, wherein the electric motor is a split-phase electric motor and the integrated power conversion system is adapted to be coupled to a charger at a middle point of each of the open stator windings.
11. The integrated power conversion system of clause 6, wherein, in the traction mode, the battery group and the inverter/power converter provide current to the end of the open stator windings and the other battery group and the other inverter/power converter provide current to the other end of the open stator windings to cause a rotor of the electric motor to rotate, and wherein a voltage difference between the inverter/power converter and the other inverter/power converter determines the differential voltage of each of the open stator windings.
12. The integrated power conversion system of clause 6, wherein, in the traction mode, the battery group and the inverter/power converter provide current to the end of the open stator windings and the other battery group and the other inverter/power converter provide current to the other end of the open stator windings to cause a rotor of the electric motor to rotate, wherein a voltage difference between the inverter/power converter and the other inverter/power converter determines the differential voltage of each of the open stator windings, and wherein a charging contactor at a middle point of each of the open stator windings is opened.
13. The integrated power conversion system of clause 8, wherein the charger is a DC charger and in the lower voltage DC charging mode:
   when a voltage of the DC charger is equal to a voltage of the battery group, if a voltage of the other battery group is less than the voltage of the battery group, then energy from the battery group flows to the other battery group, and if the voltage of the other battery group is greater than the voltage of the battery group, then the other inverter/power converter, the open stator windings, and a DC capacitor form a boost DCDC converter; and
   when the voltage of the DC charger is lower than the voltage of the battery group, the other battery group is charged first and subsequently transfers energy to the battery group.
14. The integrated power conversion system of clause 9, wherein the charger is a DC charger and in the lower voltage DC charging mode:
   when a voltage of the DC charger is equal to a voltage of the battery group, if the voltage of the battery group is less than a voltage of the other battery group, then the inverter/power converter lets current pass through and the other inverter/power converter, the open stator windings, and a DC capacitor form a boost DCDC converter, and if the voltage of the battery group is greater than the voltage of the other battery group, then the inverter/power converter lets current pass through, the inverter/power converter, the open stator windings, and another DC capacitor form a buck DCDC converter, and the other inverter/power converter lets current pass through; and
   when a voltage of the DC charger is lower than the voltage of the battery group, then the other battery group is charged first with a contactor open and subsequently sends energy to the battery group with the contactor closed and other contactors open to disconnect the DC charger.
15. The integrated power conversion system of clause 10, wherein the charger is a DC charger and in the lower voltage DC charging mode:
   when a voltage of the DC charger is equal to a voltage of the battery group, if a voltage of the other battery group is less than the voltage of the battery group, then energy from the battery group flows to the other battery group, and if the voltage of the other battery group is greater than the voltage of the battery group, then the other inverter/power converter, the open stator windings, and a DC capacitor form a boost DCDC converter; and
   when the voltage of the DC charger is lower than the voltage of the battery group, the other battery group is charged first and subsequently transfers energy to the battery group.
16. The integrated power conversion system of clause 6, wherein the charger is a DC charger, in the higher voltage DC charging mode, the DC charger is connected in parallel to a series-chain of the battery group and the other battery group, a voltage of the DC charger is equal to the summation of voltages of the battery group and the other battery group, and the inverter/power converter and the other inverter/power converter divide the voltage of the DC charger into the voltages of the battery group and the other battery group.
17. The integrated power conversion system of clause 8, wherein, in the AC charging mode, the charger is an AC grid coupled to the end of the open stator windings adjacent to the inverter/power converter and at the pole of one or more of the battery group and the other battery group one of directly and through an intervening power factor correction (PFC) stage.
18. The integrated power conversion system of clause 9, wherein the charger is an AC grid coupled to an intervening power factor correction (PFC) stage and in the AC charging mode:
   the PFC stage rectifies AC voltage of the AC grid to a DC voltage, wherein the PFC stage has a same number of phases as the AC grid, and wherein the DC voltage is unequal to voltages of the battery group and the other battery group;
   wherein the other battery group is charged using the PFC through the electric motor; and
   wherein the battery group is charged using the other battery group through the electric motor.
19. The integrated power conversion system of clause 10, wherein, in the AC charging mode, the charger is an AC grid coupled to the middle point of the open stator windings one of directly and through an intervening power factor correction (PFC) stage.
20. The integrated power conversion system of clause 1, wherein the integrated power conversion system is bidirectionally electrically coupled to one of a DC charging infrastructure and an AC charging infrastructure.
21. The integrated power conversion system of clause 1, wherein the integrated power conversion system is electrically coupled to a 1-phase AC charging infrastructure.
22. The integrated power conversion system of clause 6, wherein voltage is balanced between the battery group and the other battery group using the electric motor, the inverter/power converter, and the other inverter/power converter as one of a buck direct-current-to-direct-current (DCDC) buck converter and a DCDC boost converter in any of the traction mode, the lower voltage DC charging mode, the higher voltage DC charging mode, and the AC charging mode.
23. An electric vehicle, comprising:
   an integrated power conversion system, comprising:
   an electric motor utilizing open stator windings;
   a direct-current-to-alternating-current (DCAC) inverter/power converter electrically coupled to an end of the open stator windings; and
   a battery group electrically coupled to the inverter/power converter;
   wherein the integrated power conversion system is adapted to be selectively operated in all of a traction mode, a lower voltage direct-current (DC) charging mode, a higher voltage DC charging mode, and an alternating current (AC) charging mode.
24. The electric vehicle of clause 23, wherein the integrated power conversion system further comprises:
   another DCAC inverter/power converter electrically coupled to another end of the open stator windings opposite the inverter/power converter; and another battery group electrically coupled to the other inverter/power converter, wherein the other battery group is isolated from the battery group.
25. An integrated power conversion method, comprising:
   providing an integrated power conversion system, comprising:
      an electric motor utilizing open stator windings;
      a direct-current-to-alternating-current (DCAC) inverter/power converter electrically coupled to an end of the open stator windings; and
      a battery group electrically coupled to the inverter/power converter;
      wherein the integrated power conversion system is adapted to be selectively operated in all of a traction mode, a lower voltage direct-current (DC) charging mode, a higher voltage DC charging mode, and an alternating current (AC) charging mode; and
   selectively operating the integrated power conversion system in any of the traction mode, the lower voltage DC charging mode, the higher voltage DC charging mode, and the AC charging mode.
26. The integrated power conversion method of clause 25, wherein the integrated power conversion system further comprises:
   another DCAC inverter/power converter electrically coupled to another end of the open stator windings opposite the inverter/power converter; and
   another battery group electrically coupled to the other inverter/power converter, wherein the other battery group is isolated from the battery group.

Although the present disclosure is illustrated and described with reference to illustrative embodiments and specific examples, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following non-limiting claims for all purposes.

## Claims

1. An integrated power conversion system, comprising:
an electric motor utilizing open stator windings;
a direct-current-to-alternating-current, DCAC, inverter/power converter electrically coupled to an end of the open stator windings; and
a battery group electrically coupled to the inverter/power converter;
wherein the integrated power conversion system is adapted to be selectively operated in all of a traction mode, a lower voltage direct-current, DC, charging mode, a higher voltage DC charging mode, and an alternating current, AC, charging mode.

2. The integrated power conversion system of claim 1, wherein the integrated power conversion system is adapted to be coupled to a charger at another end of the open stator windings opposite the inverter/power converter.

3. The integrated power conversion system of any of claims 1, wherein, in the traction mode, the battery group and the inverter/power converter provide current to the end of the open stator windings to cause a rotor of the electric motor to rotate and another end of the open stator windings is connected to one of a Y-connection and a Delta connection.

4. The integrated power conversion system of claim 2, wherein:
• in the AC charging mode, the charger is an AC grid coupled to the other end of the open stator windings one of directly and through an intervening power factor correction, PFC, stage; or
• the charger is a DC charger and:
- in the lower voltage DC charging mode, a voltage of the DC charger is lower than a voltage of the battery group, the open stator windings and the inverter/power converter forming a boost direct-current-to-direct-current, DCDC, converter between the DC charger and the battery group; and
- in the higher voltage DC charging mode, the voltage of the DC charger is equal to or higher than the voltage of the battery group, the inverter/power converter letting current pass through from the DC charger to the battery group.

5. The integrated power conversion system of claim 1, further comprising:
another DCAC inverter/power converter electrically coupled to another end of the open stator windings opposite the inverter/power converter; and
another battery group electrically coupled to the other inverter/power converter, wherein the other battery group is isolated from the battery group.

6. The integrated power conversion system of claim 5, wherein each of the inverter/power converter and the other inverter/power converter is one of a 2-level inverter/power converter and a multilevel inverter/power converter, wherein the multilevel inverter/power converter is electrically coupled to a plurality of battery groups.

7. The integrated power conversion system of claim 5, wherein the integrated power conversion system is adapted to be coupled to a charger at the end of the open stator windings adjacent to the inverter/power converter or wherein the integrated power conversion system is adapted to be coupled to a charger at a DC side of the inverter/power converter.

8. The integrated power conversion system of claim 7, wherein:
- when the integrated power conversion system is adapted to be coupled to a charger at the end of the open stator windings adjacent to the inverter/power converter, then the charger is a DC charger and in the lower voltage DC charging mode:
• when a voltage of the DC charger is equal to a voltage of the battery group, if a voltage of the other battery group is less than the voltage of the battery group, then energy from the battery group flows to the other battery group, and if the voltage of the other battery group is greater than the voltage of the battery group, then the other inverter/power converter, the open stator windings, and a DC capacitor form a boost DCDC converter; and
• when the voltage of the DC charger is lower than the voltage of the battery group, the other battery group is charged first and subsequently transfers energy to the battery group.
- And when the integrated power conversion system is adapted to be coupled to a charger at a DC side of the inverter/power converter, then the charger is a DC charger and in the lower voltage DC charging mode:
• when a voltage of the DC charger is equal to a voltage of the battery group, if the voltage of the battery group is less than a voltage of the other battery group, then the inverter/power converter lets current pass through and the other inverter/power converter, the open stator windings, and a DC capacitor form a boost DCDC converter, and if the voltage of the battery group is greater than the voltage of the other battery group, then the inverter/power converter lets current pass through, the inverter/power converter, the open stator windings, and another DC capacitor form a buck DCDC converter, and the other inverter/power converter lets current pass through; and
• when a voltage of the DC charger is lower than the voltage of the battery group, then the other battery group is charged first with a contactor open and subsequently sends energy to the battery group with the contactor closed and other contactors open to disconnect the DC charger.

9. The integrated power conversion system of claim 5, wherein the charger is a DC charger, in the higher voltage DC charging mode, the DC charger is connected in parallel to a series-chain of the battery group and the other battery group, a voltage of the DC charger is equal to the summation of voltages of the battery group and the other battery group, and the inverter/power converter and the other inverter/power converter divide the voltage of the DC charger into the voltages of the battery group and the other battery group.

10. The integrated power conversion system of claim 7, wherein,
• when the integrated power conversion system is adapted to be coupled to a charger at the end of the open stator windings adjacent to the inverter/power converter, in the AC charging mode, the charger is an AC grid coupled to the end of the open stator windings adjacent to the inverter/power converter and at the pole of one or more of the battery group and the other battery group one of directly and through an intervening power factor correction (PFC) stage;
• and when the integrated power conversion system is adapted to be coupled to a charger at a DC side of the inverter/power converter, the charger is an AC grid coupled to an intervening power factor correction, PFC, stage and in the AC charging mode, the PFC stage rectifies AC voltage of the AC grid to a DC voltage, wherein the PFC stage has a same number of phases as the AC grid, and wherein the DC voltage is unequal to voltages of the battery group and the other battery group, wherein the other battery group is charged using the PFC through the electric motor, and wherein the battery group is charged using the other battery group through the electric motor.

11. The integrated power conversion system of claim 1, wherein the integrated power conversion system is bidirectionally electrically coupled to one of a DC charging infrastructure and an AC charging infrastructure or wherein the integrated power conversion system is electrically coupled to a 1-phase AC charging infrastructure.

12. The integrated power conversion system of claim 5, wherein voltage is balanced between the battery group and the other battery group using the electric motor, the inverter/power converter, and the other inverter/power converter as one of a buck direct-current-to-direct-current, DCDC, buck converter and a DCDC boost converter in any of the traction mode, the lower voltage DC charging mode, the higher voltage DC charging mode, and the AC charging mode.

13. An electric vehicle, comprising:
an integrated power conversion system, comprising:
an electric motor utilizing open stator windings;
a direct-current-to-alternating-current, DCAC, inverter/power converter electrically coupled to an end of the open stator windings; and
a battery group electrically coupled to the inverter/power converter;
wherein the integrated power conversion system is adapted to be selectively operated in all of a traction mode, a lower voltage direct-current, DC, charging mode, a higher voltage DC charging mode, and an alternating current, AC, charging mode.

14. An integrated power conversion method, comprising:
providing an integrated power conversion system, comprising:
an electric motor utilizing open stator windings;
a direct-current-to-alternating-current, DCAC, inverter/power converter electrically coupled to an end of the open stator windings; and
a battery group electrically coupled to the inverter/power converter;
wherein the integrated power conversion system is adapted to be selectively operated in all of a traction mode, a lower voltage direct-current, DC, charging mode, a higher voltage DC charging mode, and an alternating current, AC, charging mode; and
selectively operating the integrated power conversion system in any of the traction mode, the lower voltage DC charging mode, the higher voltage DC charging mode, and the AC charging mode.

15. The integrated power conversion method of claim 14, wherein the integrated power conversion system further comprises:
another DCAC inverter/power converter electrically coupled to another end of the open stator windings opposite the inverter/power converter; and
another battery group electrically coupled to the other inverter/power converter, wherein the other battery group is isolated from the battery group.
